**Europäisches Patentamt**

(19) **European Patent Office**

**Office européen des brevets**

(11) Numéro de publication: **0 203 003**
**B1**

(12) **FASCICULE DE BREVET EUROPEEN**

(45) Date de publication du fascicule du brevet:
**26.07.89**

(51) Int. Cl.⁴: **E21B 33/038**, E21B 17/01,
F16B 21/00, B25B 29/02

(21) Numéro de dépôt: **86401038.4**

(22) Date de dépôt: **15.05.86**

(54) Dispositif d'assemblage à distance de deux organes.

(30) Priorité: **17.05.85 FR 8507583**

(43) Date de publication de la demande:
**26.11.86 Bulletin 86/48**

(45) Mention de la délivrance du brevet:
**26.07.89 Bulletin 89/30**

(84) Etats contractants désignés:
**FR GB NL**

(56) Documents cités:
**EP-A- 0 024 180**
**FR-A- 116 488**
**FR-A- 2 475 674**
**US-A- 4 297 965**

(73) Titulaire: **INSTITUT FRANCAIS DU PETROLE, 4, Avenue de Bois-Préau, F-92502 Rueil-Malmaison(FR)**

(72) Inventeur: **Falcimaigne, Jean, 19, avenue de Chevreul, F-92270 Bois Colombes(FR)**

(74) Mandataire: **Aubel, Pierre et al, Institut Français du Pétrole Département Brevets 4, avenue de Bois Préau, F-92502 Rueil-Maimaison(FR)**

ACTORUM AG

# Description

La présente invention concerne un dispositif d'assemblage à distance de deux organes.

Il est souvent nécessaire d'assembler à distance deux organes, de manière qu'ils soient fortement appliqués l'un à l'autre, notamment en milieu marin.

Une telle opération est difficilement réalisable par des plongeurs du fait de l'absence de point d'appui dans l'eau. Dans d'autres cas une telle opération ne peut pas être envisagée parce qu'elle se déroule dans des milieux ou l'homme ne peut pas intervenir.

L'art antérieur peut être illustré par le brevet européen EP-A 0 024 180, le brevet français FR-A 2 475 674, le brevet américain US-A 4 297 965 et la demande de brevet EP-A 0 116 488.

La demande de brevet EP-A 0 024 180 décrit un dispositif d'ancrage pour la connexion sous marine d'une conduite avec une tête de puits. Ce dispositif d'ancrage comporte deux segments mobiles et circonférentiels ayant des portées inclinées s'appuyant sur d'autres parties inclinées solidaires d'un guide. Un piston hydraulique réalise une translation entre les segments et le guide et du fait des portées inclinées produit une dilatation des segments et l'ancrage du guide à l'intérieur d'une tête de puits.

La demande de brevet FR-A 2 475 674 décrit un appareil commandé à distance permettant de visser les vis pour assembler un couvercle avec la cuve d'un réacteur sous pression.

Le brevet US-A 4 297 965 décrit une structure sous-marine comportant une bouée retenue du fond de l'eau par des éléments tubulaires fixés à des moyens d'arrimage disposés au fond de l'eau.

La demande de brevet EP-A 0 116 488 décrit un appareil de vissage-dévissage des goujons de fixation du couvercle de la cuve d'un réacteur nucléaire et de vissage et de dévissage des écrous de serrage du couvercle. Cet appareil comporte des moyens de prétension de la tête d'un goujon, des moyens de levage et de traction de la tête de goujon adaptés à lever, abaisser ou à mettre en extension des goujons, des moyens de vissage et dévissage du goujon, des moyens de vissage et dévissage de l'écrou. L'appareil réalise le serrage du couvercle du réacteur sur la cuve en vissant un goujon dans la cuve, en tirant sur le goujon, en vissant l'écrou sur le goujon, et en relachant la traction sur le goujon. L'ancrage des goujons dans la cuve est obtenu par le vissage du goujon dans la cuve.

La présente invention fournit un dispositif d'assemblage à distance de deux organes à l'aide d'au moins un élément d'assemblage oblong, le dispositif comportant des moyens d'ancrage du dit élément d'assemblage sur un premier desdits organes, des moyens de tensionnement télécommandés dudit élément d'assemblage et les moyens de verrouillage dudit élément d'assemblage sur le deuxième organe, les moyens d'ancrage comportant un corps solidaire de l'élément d'assemblage. Le dispositif selon la présente invention se caractérise en ce que ledit corps comporte au moins un chien adapté à coopérer avec un profil solidaire d'un réceptacle qui est lui-même solidaire du premier organe, ledit corps se logeant au moins partiellement dans ledit réceptacle, ledit corps étant creux et comportant un piston adapté à coulisser dans ce corps, ce piston pouvant occuper une position pour laquelle il verrouille ledit chien dans ledit profil.

L'élément d'assemblage pourra être creux et le piston pourra comporter une tête de repêchage.

Les moyens de tensionnement pourront comporter au moins un vérin.

Les moyens de verrouillage pourront comporter une zone filetée à l'extrémité de l'élément d'assemblage oblong, et un écrou coopérant avec ladite zone filetée, cet écrou prenant appui sur le deuxième organe.

Les moyens de verrouillage pourront comporter un moteur dont l'axe est équipé d'une roue dentée adaptée à coopérer avec des dents, aménagées sur la face externe dudit écrou.

Les moyens de tensionnement pourront comporter un socle reposant sur le deuxième organe, des vérins et un connecteur, ce connecteur étant adapté à saisir l'extrémité dudit élément d'assemblage oblong, lesdits vérins prenant appui entre ledit socle et ledit connecteur.

Ce socle pourra comporter des tiges sur lesquelles pourront coulisser des butées, ces tiges pourront comporter également des butées fixes limitant la course des butées coulissantes.

Les moyens de verrouillage pourront comporter un moteur reposant sur le socle.

La présente invention sera mieux comprise et ses avantages apparaîtront plus clairement à la description qui suit d'un exemple particulier, nullement limitatif, illustré par les figures ci-annexées, parmi lesquelles :

- la figure 1 représente schématiquement l'ensemble du dispositif selon l'invention appliqué à l'assemblage de deux bouées, ce dispositif comporte des moyens d'ancrage, des moyens de tensionnement et des moyens de verrouillage,
- les figures 2, 3 et 4 illustrent d'une manière plus détaillée les moyens d'ancrage, la figure 4 étant une vue en coupe de la figure 3,
- les figures 5 et 6 représente les moyens de tensionnement et de verrouillage, la figure 6 étant une vue du dessus de la figure 5, et
- les figures 7 à 11 montrent différentes phases de mise en oeuvre du dispositif selon l'invention.

L'exemple particulier décrit ci-après concerne l'assemblage de deux bouées dans un milieu marin.

La référence 1 désigne une bouée auxiliaire qui doit être assemblée à une bouée principale 2.

Un tel agencement se rencontre, par exemple, lorsqu'une colonne de production, supportée par une bouée auxiliaire, doit être mise en tension par une bouée principale.

La bouée principale peut être amenée vers la bouée auxiliaire par ballastage. La mise en tension de la colonne se faisant après assemblage des deux bouées par le déballastage de la bouée principale.

La phase d'approche de la bouée principale 2 vers la bouée auxiliaire, pourra utiliser des lignes guides 3 fixées à la bouée auxiliaire en 4 traversant de part en part la bouée principale à travers des passages 5.

De plus dans la phase finale du rapprochement des deux bouées on peut utiliser des doigts 6 qui permettront une approche finale précise des bouées ; ces doigts pourront coopérer avec l'extrémité des passages 5.

L'assemblage de la bouée auxiliaire 1 et de la bouée principale 2 se fait par des éléments d'assemblage oblongs 7. L'élément d'assemblage 7 est fixé d'un côté à la bouée auxiliaire 1 grâce à des moyens d'ancrage 8 et de l'autre côté à la bouée principale grâce à des moyens de verrouillage 9.

Le dispositif d'assemblage selon l'invention comporte également des moyens de tensionnement 10.

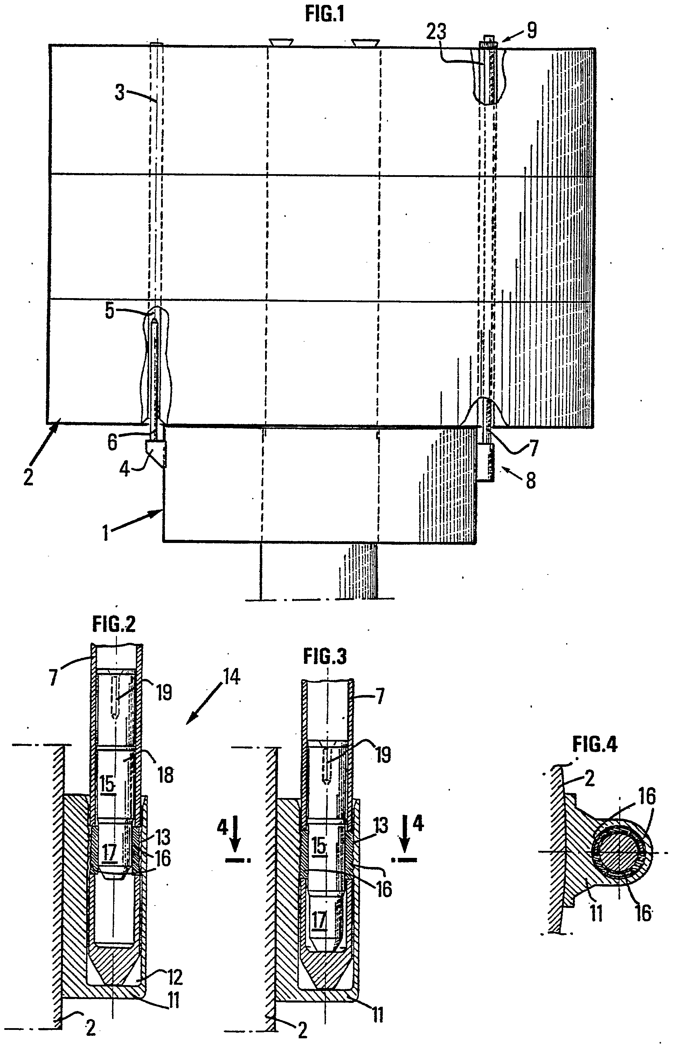

Les figures 2 et 3 représentent un mode de réalisation des moyens d'ancrage.

La figure 2 représente les moyens d'ancrage en position non ancrée et la figure 3 en position ancrée.

Ces moyens d'ancrage comportent un réceptacle 11 solidaire de la bouée auxiliaire 2. Ce réceptacle comporte un logement 12. Un profil 13 est réalisé à l'intérieur du logement 12.

Ce profil peut être sinusoïdal, en dents de scie ou de tout autre forme, dès l'instant que celle-ci permet l'accrochage d'une forme complémentaire.

Dans le cas représenté aux figures 2 et 3 l'extrémité 14 de l'élément d'assemblage oblong 2 est creux, et comporte un organe de verrouillage tel un piston 15, ainsi que des ouvertures dans lesquelles sont disposés des chiens 16. Les chiens 16 comportent sur une partie au moins de leurs faces extérieures un profil complémentaire de celui 13 réalisé à l'intérieur du logement 12.

Le piston 15 possède une position représentée à la figure 3 pour laquelle il applique les chiens 16 contre le profil 13 réalisé dans le réceptacle 11, réalisant ainsi un ancrage de l'extrémité 14 de l'élément d'assemblage oblong 7.

Dans l'exemple représenté aux figures 2 et 3 le piston possède une forme de deux cylindres 17 et 18 de diamètres différents.

Lorsque les chiens sont dans la position dite "libre" représentée à la figure 2, ils s'appliquent sur le cylindre 17 de plus petit diamètre. Lorsque les chiens sont dans la position de verrouillage représentée à la figure 2 ils s'appliquent sur le cylindre 18 de plus grand diamètre.

Le piston 15 pourra être placé dans la position correspondant au verrouillage des chiens par la mise en pression de la partie de l'élément d'assemblage oblong se trouvant au-dessus du piston. Bien entendu dans ce cas l'élément d'assemblage 7 devra comporter un passage permettant la mise en pression du compartiment se trouvant au-dessus du piston.

Par exemple l'élément d'assemblage 7 pourra être creux sur toute sa longueur. Ce passage pourra alors, être utilisé pour récupérer le piston par un outil de repêchage suspendu à une ligne. Cet outil pourra coopérer avec l'orifice 19 aménagé au sommet du piston.

La figure 4 représente une coupe des moyens d'ancrage 8 suivant la ligne AA de la figure 3.

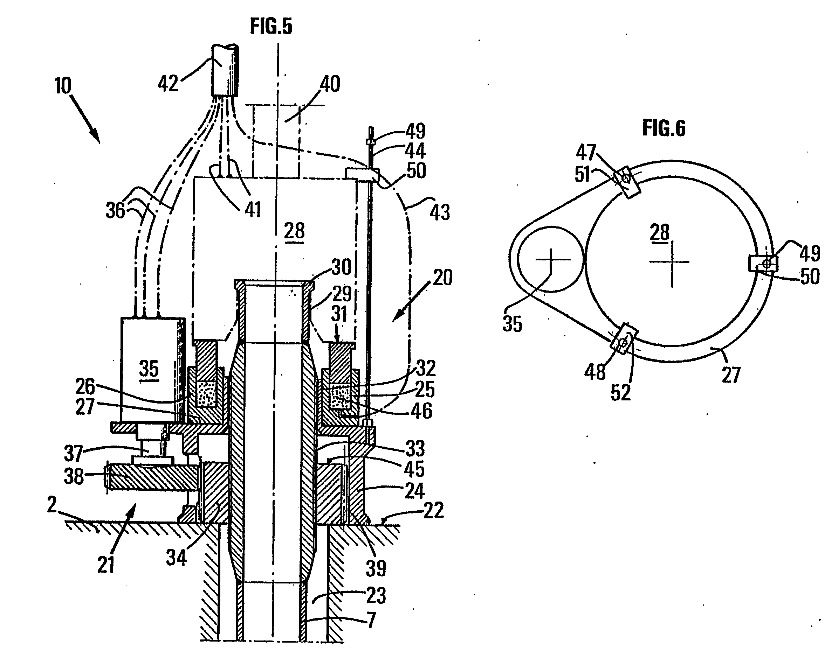

La figure 5 représente les moyens de tensionnement 20 et les moyens de verrouillage 21.

La référence 22 désigne le sommet de la bouée principale 2 et la référence 23 le passage aménagé dans la bouée principale et qui est traversé par l'élément d'assemblage oblong 7 qui, dans le cas de l'exemple représenté, comporte un tube.

Dans le cas de la figure 5, les moyens de tensionnement comportent un socle 24 prenant appui sur le sommet 22 de la bouée principale.

Plusieurs vérins 25, 26 prennent appui sur une table 27 aménagée sur ce socle.

Un connecteur 28 comportant des machoires 29 permet de saisir un collet 30 solidaire de l'extrémité supérieure de l'élément d'assemblage oblong 7.

Le connecteur 28 possède une surface 31 pouvant prendre appui sur les vérins 25 et 26.

Le socle 24 peut comporter un manchon 32 de l'extrémité supérieure de l'élément d'assemblage 7.

Les moyens de verrouillage 21 comportent une zone filetée 33 aménagée à l'extrémité supérieure de l'élément d'assemblage oblong 7, mais sous le collet 30, un écrou 34 coopérant avec ledit filet et des moyens pour visser ou dévisser ledit écrou 34 à distance. Ces moyens comportent, dans le mode de réalisation représenté à la figure 6, un moteur hydraulique 35 éventuellement relié à la surface par des câbles 36. Ces câbles permettant d'alimenter le moteur 35 en énergie depuis la surface.

Le moteur 35 comporte un axe 37 servant à entraîner une roue dentée 38 coopérant avec des dents 39 solidaires de la périphérie de l'écrou 34.

Le connecteur 28 peut être reliée à la surface par un tube de suspension 40 et actionné par des lignes de commande 41 également reliées à la surface.

Ces lignes de commande ainsi que les câbles servant à alimenter le moteur 35 peuvent être regroupés ensemble dans un tube ombilical 42. D'ailleurs ce tube pourra comporter d'autres lignes, reliant le socle 24, ou des éléments qu'il supporte à la surface, notamment les canalisations hydrauliques 43 d'alimentation des vérins 25 et 26.

On remarquera sur la figure 5 et/ou la figure 6, qui est une vue du dessus partielle de la figure 5, la présence de tiges 44 fixées au socle 24 à l'une de leurs extrémités et comportant une butée fixe 47, 48 et 49 à l'autre extrémité.

En outre, chacune de ces tiges comporte une butée intermédiaire pouvant coulisser sur ces tiges. Ces butées intermédiaires prennent appui sur la face supérieure du connecteur 28.

Il est bien entendu que les butées intermédiaires 50, 51 et 52 peuvent être remplacées par un autre moyen équivalent, tel par exemple, une seule butée annulaire.

Un exemple de la mise en oeuvre du dispositif selon l'invention est décrit ci-après.

Les deux bouées étant rapprochées l'une de l'autre de la manière indiquée précédemment grâce, notamment, aux lignes guides 3 et aux doigts de guidage 6 et, éventuellement, à des capteurs accoustiques de distance, les éléments d'assemblage oblong 7 sont descendus à travers les passages 23.

Lors de cette descente l'élément d'assemblage oblong 7 est suspendu au connecteur 28 grâce au collet 30.

L'écrou 34 pourra supporter le socle 24 sur sa face superieure 45.

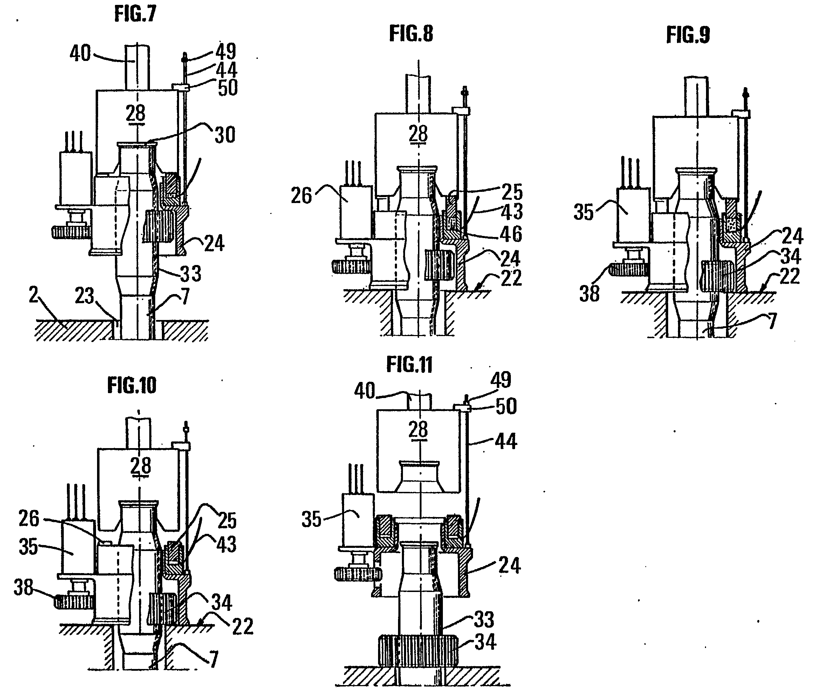

La position de l'écrou sur la zone filetée 33 peut être telle que les vérins 25 et 26 soient en butée basse et au contact de la surface d'appui 31 du connecteur comme représenté à la figure 7. Ceci n'est pas obligatoire et l'on peut admettre qu'il y ait un espace libre entre les vérins 25 et 26 et la face d'appui 31 du connecteur 28.

Le connecteur 28 peut être relié à la surface par tube 42 une fois les moyens d'ancrage 14 en place dans le réceptacle 11.

Le piston 15 est introduit dans la position de verrouillage représentée à la figure 3. Ce piston 15 pourra être soit descendu depuis la surface à travers le tube 42 et l'élément d'assemblage oblong 7 luimême, soit être dans la position de la figure 2 dés le début de l'opération d'ancrage.

Le piston 15 pourra être éventuellement pompé pour atteindre sa position de verrouillage.

Une fois cet ancrage réalisé les vérins 25 et 26 sont activés en envoyant du fluide sous pression dans les chambres 46 des vérins par la ou les lignes hydrauliques 43. Ce faisant les pistons des vérins mettent en tension l'élément d'assemblage oblong, puisque les vérins prenant appui sur le socle 24 qui prend lui-même appui sur le sommet 22 de la bouée 2 poussent le connecteur 28 grâce aux surfaces d'appui 31.

Par l'intermédiaire de ses machoires 29 le connecteur 28 met en tension l'élément d'assemblage allongé 7. Ceci est illustré à la figure 8.

Lorsque la tension souhaitée de l'élément d'assemblage oblong est atteinte, le moteur 35 (voir figure 8) est activé dans le sens approprié pour appliquer l'écrou 34 sur le sommet d'appui 22 de la bouée 2, grâce à la roue dentée 38 (voir figure 9). Le moteur 35 peut, par exemple, être un moteur hydraulique.

Cela étant réalisé, la pression dans la chambre 46 des vérins est abaissée, ce qui libère le connecteur 28. Lors de cette opération les efforts de maintien en tension de l'élément d'assemblage oblong 7 sont transférés sur l'écrou 34. (voir figure 10).

Les machoires 29 du connecteur 28 peuvent être relachées.

Le tube de suspension 40 est retiré. Il entraîne avec lui le connecteur 28 qui amène les butées coulissantes 50, 51 et 52 au contact des butées fixes 47, 48 et 49 et donc grâce aux tiges 44 le socle 24 ainsi que les équipements qu'il supporte, notamment le moteur 35 et les vérins 25 et 26 sont remontés à la surface (voir figure 11).

Les éléments d'assemblage oblongs restent en place et maintiennent ensemble les deux bouées.

Pour le démontage des éléments d'assemblage oblong on procède de la manière inverse de celle exposée précédemment.

Les pistons 15 sont repêchés grâce à l'orifice 19 et à une ligne de repêchage.

Il est bien évident que l'effet de tensionnement exercé sur l'élément d'assemblage 7 pourra être supérieur ou égal à l'effort qui tend dans certaines applications, à désolidariser les deux organes à assembler.

## Revendications

1. Dispositif d'assemblage à distance de deux organes (1, 2) à l'aide d'au moins un élément d'assemblage oblong (7), le dispositif comportant des moyens d'ancrage (8) dudit élément d'assemblage (7) sur l'un desdits organes, ou premier organe (1), des moyens de tensionnement télécommandés (10) dudit élément d'assemblage et des moyens de verrouillage télécommandés (21) dudit élément d'assemblage sur l'autre organe (2), ou deuxième organe, les moyens d'ancrage (8) comportant un corps solidaire dudit élément d'assemblage (7), le dispositif est caractérisé en ce que ledit corps comporte au moins un chien (16) adapté à coopérer avec un profil (13) solidaire d'un réceptacle (11) lui-même solidaire du premier organe (1), ledit corps se logeant au moins partiellement dans ledit réceptacle. ledit corps étant creux et comportant un piston (15) adapté à coulisser dans ledit corps, ledit piston pouvant occuper une position pour laquelle il verrouille ledit chien (16) dans ledit profil (13).

2. Dispositif selon la revendication 1, caractérisé en ce que ledit piston comporte une tête de repêchage.

3. Dispositif selon la revendication 1, caractérisé en ce que les moyens de tensionnement (10) comportent au moins un vérin (25 ou 26).

4. Dispositif selon la revendication 1, caractérisé en ce que lesdits moyens de verrouillage (21) comportent une zone filetée (33) à l'extrémité de l'élément d'assemblage oblong (7), et un écrou (34) coopérant avec ladite zone filetée, ledit écrou prenant appui sur ledit deuxième organe (2).

5. Dispositif selon la revendication 4, caractérisé en ce que lesdits moyens de verrouillage (21) comportent un moteur (35) dont l'axe est équipé d'une roue dentée (38) adaptée à coopérer avec des dents (39), aménagée sur la face externe dudit écrou.

6. Dispositif selon la revendication 1, caractérisé en ce que les moyens de tensionnement (20) comportent un socle (24) reposant sur ledit deuxième organe (2), au moins un vérin (25 ou 26) et un connecteur (28), ledit connecteur étant adapté à saisir l'extrémité (30) dudit élément d'assemblage oblong (7), ledit vérin prenant appui entre ledit socle et ledit connecteur.

7. Dispositif selon la revendication 6, caractérisé en ce que ledit socle (24) comporte des tiges (44) sur lesquelles coulissent des butées (50) adaptées à coulissées sur lesdites tiges, celle-ci comportant également des butées fixes (49) limitant la course des butées coulissantes.

8. Dispositif selon la revendication 6, caractérisé en ce que lesdits moyens de verrouillage (21) comportent un moteur et en ce que ledit moteur repose sur ledit socle (24).

9. Dispositif selon la revendication 1, caractérisé en ce que l'un au moins desdits organes est une bouée.

**Patentansprüche**

1. Vorrichtung zur Fernmontage von zwei Organen (1, 2) mit Hilfe wenigstens eines länglichen Montageelements (7), wobei die Vorrichtung Einrichtungen (8) zur Verankerung dieses Montageelements an einem dieser Organe oder dem ersten Organ (1) aufweist, ferngesteuerte Einrichtungen (10) zum Spannen dieses Montageelements und ferngesteuerte Verriegelungseinrichtungen (21) für dieses Montageelement am anderen Organ (2) oder zweitem Organ, wobei die Verankerungseinrichtungen (8) einen am Montageelement (7) festen Körper umfassen, wobei die Vorrichtung dadurch gekennzeichnet ist, daß dieser Körper wenigstens ein Spannstück (16) aufweist, das so ausgebildet ist, daß es mit einem an einem Aufnehmer (11) festen Profil (13) zusammenwirkt, wobei dieses selbst fest bezüglich des ersten Organs (1) ist und dieser Körper wenigstens zum Teil in diesem Aufnehmer lagert, dieser Körper hohl ist und einen Kolben (15) umfaßt, der so ausgebildet ist, daß er in diesen Körper gleitet, wobei dieser Kolben eine Stellung einzunehmen in der Lage ist, in der er dieses Spannstück (16) in diesem Profil (13) verriegelt.

2. Vorrichtung nach Anspruch 1, dadurch gekennzeichnet, daß dieses Montageelement hohl ist und daß dieser Kolben einen Fangkopf aufweist.

3. Vorrichtung nach Anspruch 1, dadurch gekennzeichnet, daß die Spanneinrichtungen (10) wenigstens einen Stellzylinder (25 oder 26) umfassen.

4. Vorrichtung nach Anspruch 1, dadurch gekennzeichnet, daß diese Verriegelungseinrichtungen (21) eine Gewindezone (33) am Ende des länglichen Montageelements (7) sowie eine mit dieser Gewindezone zusammenwirkende Mutter (34) aufweisen, wobei diese Mutter sich auf dieses zweite Organ (2) abstützt.

5. Vorrichtung nach Anspruch 4, dadurch gekennzeichnet, daß diese Verriegelungseinrichtungen (21 einen Motor (35) umfassen, dessen Achse mit einem Zahnrad (38) derartiger Ausbildung ausgestattet ist, daß es mit Zähnen (39) zusammenwirkt, die auf der Außenfläche dieser Mutter vorgesehen sind.

6. Vorrichtung nach Anspruch 1, dadurch gekennzeichnet, daß die Spanneinrichtung (20) einen auf diesem zweiten Organ (2) ruhenden Sockel (24), wenigstens einen Stellzylinder (25 oder 26) und einen Verbinder (28) umfassen, wobei der Verbinder so ausgebildet ist, daß er das freie Ende (30) dieses länglichen Montageelements (7) erfaßt, wobei dieser Stellzylinder sich zwischen diesem Sockel und diesem Verbinder abstützt.

7. Vorrichtung nach Anspruch 6, dadurch gekennzeichnet, daß dieser Sockel (24) Stangen (44) aufweist, auf denen Lager (50) gleiten, welche ebenfalls feste Lager (49) umfassen, die den Weg der Gleitlager begrenzen.

8. Vorrichtung nach Anspruch 6, dadurch gekennzeichnet, daß diese Verriegelungseinrichtungen (21) einen Motor umfassen und daß dieser Motor auf diesem Sockel (24) ruht.

9. Vorrichtung nach Anspruch 1, dadurch gekennzeichnet, daß wenigstens eines dieser Organe eine Boje ist.

**Claims**

1. A device for remote assembly of two parts (1, 2) with the aid of at least one oblong assembly element (7), the device comprising means (8) for anchoring said assembly element (7) on one of said parts, or first part (1), remote-controlled means (10) for tensioning said assembly element an remote-controlled means (21) for locking said assembly element on the other part (2), or second part, the anchoring means (8) comprising a body locked to said assembly element (7), the device being characterised in that said body comprises at least one dog (16) adapted to cooperate with a profile (13) locked to a receptacle (11) itself locked to the first part (1), said body being housed at least partly in said receptacle, said body being hollow and comprising a piston (15) adapted to slide in said body, said piston being capable of adopting a position in which it locks said dog (16) in said profile (13).

2. A device as in claim 1, characterised in that said assembly element is hollow and in that said piston comprises a recovery head.

3. A device as in claim 1, characterised in that the tensioning means (10) comprise at least one jack (25 or 26).

4. A device as in claim 1, characterised in that said locking means (21) comprise a threaded zone (33) at the end of the oblong assembly element (7), and a nut (34) cooperating with said threaded zone, said nut bearing on said second part (2).

5. A device as in claim 4, characterised in that said locking means (21) comprise a motor (35) the shaft of which is fitted with a toothed wheel (38) adapted to cooperate with teeth (39) formed on the external face of said nut.

6. A device as in claim 1, characterised in that the tensioning means (20) comprise a base (24) resting on said second part (2), at least one jack (25 or 26) and a connector (28), said connector being adapted to grasp the end (30) of said oblong assembly element (7), said jack bearing between said base and said connector.

7. A device as in claim 6, characterised in that said base (24) comprises rods (44) on which slide bearings (50) adapted to slide on said rods, the latter also comprising fixed bearings (49) limiting the travel of the sliding bearings.

8. A device as in claim 6, characterised in that said locking means (21) comprise a motor and in that said motor rests on said base (24).

9. A device as in claim 1, characterised in that at least one of said parts is a buoy.

# FIG.1

# FIG.2

# FIG.3

# FIG.4

FIG.6

FIG.5

FIG.9

FIG.8

FIG.11

FIG.7

FIG.10